(19) Europäisches Patentamt / European Patent Office / Office européen des brevets

(11) **EP 4 030 218 B1**

(12) **EUROPEAN PATENT SPECIFICATION**

(45) Date of publication and mention
of the grant of the patent:
**24.09.2025 Bulletin 2025/39**

(21) Application number: **20864151.4**

(22) Date of filing: **26.08.2020**

(51) International Patent Classification (IPC):
*G02B 27/01* (2006.01)    *B60K 35/00* (2024.01)
*G02B 5/30* (2006.01)    *G02B 27/28* (2006.01)
*B60J 3/06* (2006.01)    *G02C 7/12* (2006.01)
*B60K 35/22* (2024.01)    *B60K 35/231* (2024.01)
*B60K 35/80* (2024.01)

(52) Cooperative Patent Classification (CPC):
**G02B 27/0101; B60K 35/22; B60K 35/231;
B60K 35/80; G02B 5/3066; G02B 5/3083;
G02B 27/283; G02B 27/286;** B60J 3/06;
G02B 2027/0118; G02C 7/12

(86) International application number:
**PCT/JP2020/032121**

(87) International publication number:
**WO 2021/049295 (18.03.2021 Gazette 2021/11)**

(54) **IMAGE DISPLAY SYSTEM AND HEAD-UP DISPLAY SYSTEM**

BILDANZEIGESYSTEM UND HEAD-UP-ANZEIGESYSTEM

SYSTÈME D'AFFICHAGE D'IMAGE ET SYSTÈME D'AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2019 JP 2019164997**

(43) Date of publication of application:
**20.07.2022 Bulletin 2022/29**

(73) Proprietor: **Nippon Kayaku Kabushiki Kaisha
Tokyo 100-0005 (JP)**

(72) Inventor: **TAKAHASHI Chihiro
Tokyo 115-8588 (JP)**

(74) Representative: **Hentrich Patent- &
Rechtsanwaltspartnerschaft mbB
Syrlinstraße 35
89073 Ulm (DE)**

(56) References cited:
JP-A- 2015 225 236    JP-A- 2019 113 631
JP-A- H02 141 720    JP-A- H1 096 874
JP-U- S61 188 118    US-A1- 2017 045 659
US-A1- 2017 361 579    US-A1- 2019 129 167

EP 4 030 218 B1

**Description**

Technical Field

The present invention relates to an image display system that achieves clear visual recognition of display images while ensuring an anti-glare effect against incident light from the outside, and a head-up display system including the same.

Background Art

There are navigation systems, head-up display (hereinafter also referred to as "HUD") systems, and the like which are used as a method to display information for drivers or pilots of automobiles, aircraft, and the like. The HUD is a system that projects images projected from image projection means such as a liquid crystal display (hereinafter also referred to as an "LCD"), for example, onto the windshield or the like of an automobile.

The emission light emitted from the image display means reflects on a reflection mirror, further reflects on the windshield, and then reaches the observer. Although the observer sees images projected onto the windshield, the images are seen as if they were at image positions farther than the windshield. In this method, the driver can obtain various kinds of information with his/her eyes focused on the direction of the windshield, almost without moving his/her line of sight. Hence, this is safer than the conventional car navigation which requires movement of the line of sight.

Since in the HUD, display information is projected and superposed onto the view actually seen through the windshield, it is desirable that bright and easy-to-see images be displayed without blocking the field of view. To this end, the HUD needs to have both transparency that allows the front view to be sufficiently seen and reflectivity that allows the display images by the HUD to be sufficiently seen. However, the display light is reflected by the two surfaces of the windshield both on the interior side and on the exterior side, and thus there is a problem that the reflection images are seen as double vision images, and display information is difficult to see.

To address this problem, it is known that the problem that reflection images are seen as double vision images can be improved by using an optical rotator capable of changing the polarization direction by 90° in the windshield of an automobile. For example, JP 06-040271 A (Japanese Patent Application Publication No. H06-40271) discloses that in the case in which display light of S polarized light is incident at the Brewster's angle on the windshield for an automobile including, in its inside, an optical rotator in the form of a film, part of S polarized light is reflected on the surface of the windshield on the automobile interior side, the S polarized light that passes through the surface is converted by the optical rotator into P polarized light, all the P polarized light is emitted through the surface of the windshield on the automobile exterior side to the outside of the automobile, and thereby the occurrence of double vision images is prevented. JP 06-040271 A (Japanese Patent Application Publication No. H06-40271) also discloses that in the case in which display light of P polarized light is incident at the Brewster's angle on the windshield for an automobile, the P polarized light is not reflected on the surface of the windshield on the automobile interior side, the P polarized light that passes through the surface is converted by the optical rotator into S polarized light, almost all the S polarized light is reflected on the surface of the windshield on the automobile exterior side, the S polarized light is converted again by the optical rotator into P polarized light, and thereby the occurrence of double vision images is prevented.

There are cases in which sunglasses are used to reduce glare of reflected light from the road surface or the like. Since light reflected on the road surface, in general, tends to be polarized, use of polarized sunglasses is effective against this reflected light. However, polarized sunglasses are generally configured to cut S polarized light components for their anti-glare function. Thus, in the case in which the viewer wears polarized sunglasses, if the main components of display light are S polarized light, when the display light passes through the polarized sunglasses, the brightness (display brightness) of the display light is greatly reduced. Since how virtual images are seen varies greatly depending on whether the viewer wears polarized sunglasses, there is a concern that the viewer feels the sense of incongruity.

WO 2016 / 056 617 A1 discloses that in the case in which functional glass including a light control film laminated such that a cholesteric liquid crystal layer is sandwiched by two 1/4 wavelength plates is used for the windshield for an automobile, it is possible to provide high visual recognition even when polarized sunglasses are used. Specifically, after display light of P polarized light is incident on the functional glass described above at the Brewster's angle, the transmitted light is converted by the 1/4 wavelength plate on the automobile interior side into circularly polarized light, and the circularly polarized light is further reflected on a cholesteric liquid crystal layer. The transmitted light that does not reflect on the cholesteric liquid crystal layer is converted by the 1/4 wavelength plate on the automobile exterior side into P polarized light again and emitted to the outside of the automobile. The occurrence of the double vision images is thus prevented in the disclosure. However, since this method requires the conversion from P polarized light into circularly polarized light, there may be cases in which the brightness is not sufficient depending on the conversion efficiency. For this reason, clearer visual recognition of display images is desired.

JP 2015 225 236 A discloses that in a head-up display device in which light of a light source including both types of S polarized light components and P polarized light components is used to project images, polarized sunglasses are used to adjust the block axis from which the incident light is blocked according to the retardation value of the retardation plate disposed at the windshield. However, in this method, it is difficult to obtain a sufficient anti-glare effect without strictly controlling the block axis, and there is also a concern of double vision images.

Meanwhile, inorganic glass is typically used for the windshield of a vehicle body, but nowadays, use of resins is desired from the viewpoint of lower fuel consumption by weight reduction, integral molding with peripheral parts, and decorative appearance. For resin windshields, it is expected that a single transparent resin substrate is the main constituent member, instead of the configuration of laminated glasses with an intermediate film in between. Also in this case, improvement for double vision images is required, and in addition, further improvement is required to address decrease in the brightness affected by the conversion efficiency and to achieve energy saving.

JP 2019 113 631 A describes a head-up display device capable of satisfying the visibility of both an image and the landscape of an occupant wearing polarized sunglasses.

US 2017 / 0 045 659 A1 describes a head-up display module that emits polarized light, whereas a windshield reflects the polarized light towards a driver of the vehicle.

US 2019 / 0 129 167 A1 describes a head-up display for a vehicle, which reflects display light from a display onto the windshield, whereas the driver perceives the reflected display light as a virtual image.

Summary of Invention

Technical Problem

The present invention provides an image display system that achieves clear visual recognition of display images while ensuring an anti-glare effect against incident light from the outside, and a head-up display system using the same.

Solution to Problem

The technical problem is solved by an image display system according to claim 1 and by head-up display according to claim 12. Preferred embodiments are mentioned in the dependent claims.

According to the present invention, it is possible to provide an image display system that achieves clear visual recognition of display images while ensuring an anti-glare effect against incident light from the outside, and a head-up display system using the same.

Brief Description of Drawings

[Fig. 1] A schematic diagram illustrating an embodiment of an optical laminate that an image display system of the present invention has

[Fig. 2] A schematic diagram illustrating an embodiment of a polarized-light control unit that the image display system of the present invention has

[Fig. 3] A schematic overview diagram illustrating a first embodiment of a head-up display system including an image display system of the present invention

[Fig. 4] A schematic overview diagram illustrating an optical path for the case in which reflected light from the road surface is incident on the optical laminate in the head-up display system of Fig. 3

[Fig. 5] A schematic overview diagram illustrating a second embodiment of a head-up display system including an image display system of the present invention

[Fig. 6] A schematic overview diagram illustrating an optical path for the case in which reflected light from the road surface is incident on the optical laminate in the head-up display system of Fig. 5

[Fig. 7] A schematic overview diagram illustrating a third embodiment of a head-up display system including an image display system of the present invention

[Fig. 8] A schematic overview diagram illustrating an optical path for the case in which reflected light from the road surface is incident on the optical laminate in the head-up display system of Fig. 7

Description of Embodiments

Hereinafter, embodiments according to the present invention will be described with reference to the drawings. Note that the following embodiments merely illustrate some representative embodiments of the present invention as examples, and thus, these can be variously modified within the scope of the present invention. In addition, to make the description explicit, the widths, sizes, thicknesses, shapes, and the like in the drawings are schematically illustrated, as compared to the ones in the actual forms, and these are also mere examples. Further, in the drawings, portions unnecessary to describe effects of the present invention are omitted as appropriate, and the omission is not intended to limit the scope of the present invention.

An image display system of the present invention includes (A) an optical laminate including (a-1) an optical layer that changes a polarization direction of incident light by 90° and (a-2) at least one transparent resin substrate, (B) display-image projection means for emitting S polarized light to the optical laminate, and (C) a polarized-light control unit including (c-1) a P-polarized-light control unit that transmits S polarized light and blocks P polarized light or (c-2) an S-polarized-light control unit that changes the polarization direction of incident light by 90° and blocks S polarized light. The S polarized light reflected on the optical laminate is incident on the polarized-light control unit, and the observer can visually recognize images displayed on the optical laminate via the S polarized light or the P polarized light that has passed through the polarized-light control unit. Thus, the observer visually recognizes virtual images reflected on the observer side of the optical laminate. The S polarized light having entered the optical laminate is converted by the optical layer into P polarized light, and the P polarized light passes through to the outer side of the optical laminate. Thereby, it is possible to reduce the occurrence of double vision images dramatically. Meanwhile, since light from the outside such as reflected light from the road surface which is incident on the outer side of the optical laminate (the opposite side of observation side) includes many S polarized light components, the light from the outside is converted by the optical layer into P polarized light, but the reflected light is blocked by the polarized-light control unit and does not reach the observer. Thus, it is possible to achieve a sufficient anti-glare effect and clear visual recognition of display images.

Here, the observer side of the optical laminate means one surface side of the optical laminate closer to the observer (viewer), in other words, the side that the S polarized light from the display-image projection means (hereinafter also referred to as "display light") reaches. The outer side of the optical laminate means the other surface side of the optical laminate farther from the observer (viewer), in other words, the side that the S polarized light from the display-image projection means does not reach and that light from the outside reaches. In addition, the outside with respect to the observer (viewer), which will be described later, means the side of the polarized-light control unit on which the polarized light from the optical laminate is incident.

## (A) Optical Laminate

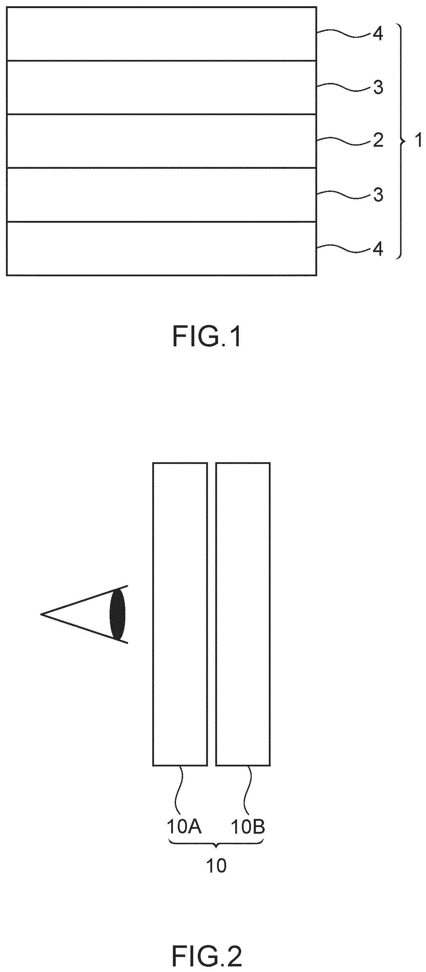

The optical laminate used in an image display system of the present invention includes an optical layer and at least one transparent resin substrate. The optical laminate may further include at least one glass plate. Fig. 1 illustrates an embodiment of an optical laminate that an image display system of the present invention has. The optical laminate 1 includes an optical layer 2, transparent resin substrates 3 disposed on both sides of the optical layer 2, and glass plates 4 are further provided on both sides of the transparent resin substrates 3. The optical laminate 1 can be produced, for example, by providing each of the transparent resin substrates 3 on both sides of the optical layer 2, sandwiching the transparent resin substrates 3 with the glass plates 4, and pressing and attaching it under a high temperature and high pressure condition.

## (a-1) Optical Layer

The optical layer has a function of changing the polarization direction of incident light by 90°, in other words, a function of converting P polarized light into S polarized light or converting S polarized light into P polarized light. Examples of an optical layer having such a function include an optical rotator, for example, a single 1/2 wavelength plate the retardation value of which is 1/2 of the desired wavelength, and a laminate of a plurality of retardation plates, for example, a laminate of two 1/4 wavelength plates. Of these, the optical layer should preferably be a 1/2 wavelength plate.

## (1/2 Wavelength Plate)

A 1/2 wavelength plate is a retardation element having a function of converting P polarized light into S polarized light or converting S polarized light into P polarized light, in other words, changing the polarization axis. A 1/2 wavelength plate can be obtained, for example, by uniaxially stretching a film produced by polycarbonate or cycloolefin polymer so that the phase difference is 1/2 of the wavelength or by orienting polymerizable liquid crystal having a horizontal orientation with such a thickness that the phase difference is 1/2 of the wavelength. In general, a 1/2 wavelength plate obtained by using polymerizable liquid crystal having a horizontal orientation includes a polymerizable liquid crystal layer as a layer having an action of changing the polarization axis and a support substrate to which application liquid to form the polymerizable liquid crystal layer is applied. The upper limit value of the thickness of such a 1/2 wavelength plate should preferably be 10 $\mu$m or less from the viewpoint of the orientation of liquid crystal, and more preferably be 5 $\mu$m or less. The lower limit value of the thickness of the 1/2 wavelength plate should preferably be 0.3 $\mu$m or more from the viewpoint of the polymerizability of liquid crystal, and more preferably be 0.5 $\mu$m or more. When light is obliquely incident on the surface of the 1/2 wavelength plate, the phase difference may vary in some case depending on the incident angle of the light. In such a case, for example, by using a retardation element the refractive index of which is adjusted to match the phase difference more strictly, it is possible to reduce the variation of the phase difference due to the incident angle. For example, defining the refractive index in the slow axis direction in the plane of the retardation element as nx, the refractive index in the direction orthogonal to nx in the plane of the retardation element as ny, and the refractive index in the thickness direction of the retardation element as nz, control is performed so that the coefficient Nz shown in the following equation (1) is preferably 0.3 or more and 1.0 or less, more preferably 0.5 or more and 0.8 or less.

[Math. 1]

$$Nz = (nx - nz)/(nx - ny) \qquad\qquad (1)$$

In an image display apparatus using such a 1/2 wavelength plate, in order to convert S polarized light into P polarized light efficiently, it is preferable to control the angle θ between the polarization axis of the S polarized light incident from a position inclined by 45° or more and 65° or less relative to the axis perpendicular to the surface of the optical laminate and the slow axis of the 1/2 wavelength plate to be 35° or more and 47° or less. Making the incident angle of the S polarized light incident on the 1/2 wavelength plate be within a range of 45° or more and 65° or less reduces the reflectance of the P polarized light theoretically within 2% or less, reducing the occurrence of double vision images. In other words, the incident S polarized light reflects on the surface of the optical laminate, and this S polarized light reaches the observer. The entered S polarized light is converted by the 1/2 wavelength plate into P polarized light, and the converted P polarized light is not reflected on the interface between air and the optical laminate on the opposite side from the incident side, and passes through. As described above, it is possible to reduce the occurrence of double vision images by controlling the incident angle of the S polarized light incident on the optical laminate. In the case in which the angle θ is less than 35° or more than 47°, the performance of the polarization axis conversion that converts the S polarized light incident on the optical laminate into P polarized light is low. As a result, display images on the display would be dark, and there is a possibility that the anti-glare effect may be impaired in the case of using eyewear. Thus, controlling this angle θ appropriately makes the 1/2 wavelength plate exhibit favorable polarization axis conversion performance, and this makes it possible to visually recognize display images more clearly.

In the case in which the 1/2 wavelength plate includes a polymerizable liquid crystal layer, liquid crystal compositions to form the polymerizable liquid crystal layer are applied onto the support substrate. Such a support substrate, in the case in which a 1/2 wavelength plate is used in a HUD, should preferably be transparent in the range of visible light to keep the visual recognition of display images. Specifically, the transmittance of visible light with a wavelength of 380 nm or more and 780 nm or less should be 50% or more, should preferably be 70% or more, and should more preferably be 85% or more. In addition, the support substrate may be colored, but should preferably not be colored or less colored. Further, the refractive index of the support substrate should preferably be 1.2 or more and 2.0 or less, and more preferably be 1.4 or more and 1.8 or less. The thickness of the support substrate may be chosen as appropriate depending on the application, but it should preferably be 5 $\mu$m or more and 1000 $\mu$m or less, more preferably be 10 $\mu$m or more and 250 $\mu$m or less, and particularly preferably be 15 $\mu$m or more and 150 $\mu$m or less.

The support substrate may be a single layer or may be a laminate having two or more layers. Examples of the material of the support substrate include triacetyl cellulose (TAC), acrylic, polycarbonate, polyvinyl chloride, polyolefin, and polyethylene terephthalate (PET). Of these materials, triacetyl cellulose (TAC), polyolefin, acrylic, and the like, having less birefringence, are preferable.

Next, a description of a method of producing a 1/2 wavelength plate by using nematic liquid crystal monomer having the above polymerizable group will be given. As such a method, for example, nematic liquid crystal monomer having a polymerizable group is dissolved in a solvent, and then, a photopolymerization initiator is added. The solvent is not limited to any particular ones as long as it is capable of dissolving the liquid crystal monomer used. Examples of the solvent include cyclopentanone, toluene, methyl ethyl ketone, and methyl isobutyl ketone, but cyclopentanone, toluene, and the like are preferable. After that, this solution is applied onto a plastic substrate, such as a PET film or a TAC film, which is used as a support substrate, such that the thickness is as uniform as possible, and then it is left to stand, while being heated to remove the solvent, for a certain time under such a temperature condition that oriented liquid crystal is produced on the support substrate. In this process, the orientation of the liquid crystal can be more uniform by performing orientation treatment such as by performing rubbing treatment on the surface of the plastic substrate in the desired orientation direction before the application, or by depositing a photo-alignment material capable of exhibiting photo-alignment characteristic when being irradiated by polarized light, on the surface of the plastic substrate, and irradiating polarized light onto it. These processes make it possible to perform control such that the slow axis of the 1/2 wavelength plate has a desired angle and to reduce the haze value of the 1/2 wavelength plate. Then, with the orientation state being kept, the nematic liquid crystal monomer is irradiated with ultraviolet rays by using a high-pressure mercury lamp or the like to fix the orientation of the liquid crystal, and thus it is possible to obtain a 1/2 wavelength plate having a desired slow axis.

A main role of the 1/2 wavelength plate which is used as an optical layer is to convert the S polarized light that does not reflect on but passes through the surface into P polarized light. This makes it possible to reduce the reflection from the transparent substrate disposed on the outer side of the optical laminate and to prevent the occurrence of double vision images. A main role of the 1/2 wavelength plate is also to convert light from the outside such as the reflected light on the road surface into P polarized light. Although the wavelength dispersibility of the 1/2 wavelength plate is not limited to any specific characteristics, it should preferably be suitable for head-up display applications. In particular, it is desirable that the 1/2 wavelength plate have reverse wavelength dispersibility so that accurate polarization conversion is possible in a wide wavelength range of the visible light range. Although in general, polymers have normal dispersion in which the absolute values of the birefringence become large on the short wavelength side, if the liquid crystal compound is one in which the birefringence on the long wavelength side becomes large by controlling the value of the birefringence Δn of each wavelength of visible light, it is possible to obtain reverse wavelength dispersibility. It is also possible to obtain reverse wavelength dispersibility by laminating a plurality of retardation plates having appropriate retardation values according to the wavelength dispersion characteristics of the liquid crystal compound with an appropriate combination of slow axes. Note that in order to change S polarized light into P polarized light efficiently, the 1/2 wavelength plate as an optical layer should preferably be disposed to have such a positional relationship that the angle between the polarization axis of the S polarized light incident in a state inclined at the Brewster's angle and the slow axis of the 1/2 wavelength plate is within the range of 45° ± 3°. The angle should more preferably be within the range of 45° ± 2°, and further preferably be within the range of 45° ± 1°.

(a-2) Transparent Resin Substrate

The optical laminate includes at least one transparent resin substrate and preferably two transparent resin substrates. In this case, the optical layer should preferably be sandwiched by the two transparent resin substrates. The two transparent resin substrates may be the same as or different from each other but should preferably be the same. Although the transparent resin substrates are not limited to any specific kinds, they should preferably be suitable for head-up display applications, and in this case, there are certain restrictions on the visible light transmittance and the haze value. For example, the visible light transmittance should preferably be 70% or more, more preferably be 75% or more, further preferably be 80% or more, particularly preferably be 85% or more, and most preferably be 90% or more. The haze value should preferably be 2% or less, more preferably be 1% or less, and further preferably be 0.5% or less. The transparent resin substrate should preferably not have optical anisotropy.

The thickness of the transparent resin substrate should preferably be 0.5 mm or more and 25 mm or less. The upper limit of the thickness of the transparent resin substrate should more preferably be 20 mm and further preferably be 15 mm. The lower limit of the thickness of the transparent resin substrate should more preferably be 0.6 mm and further preferably be 0.7 mm. Examples of the material of the transparent resin substrate include cyclic polyolefin, polyether sulfone, polyarylate, polyethylene terephthalate, a polycarbonate resin, an acrylic resin such as polymethylmethacrylate, an ABS (acrylonitrile-butadiene-styrene) resin, and a polyphenylene ether resin. Of these, a polycarbonate resin, a polymethylmethacrylate resin, and polyvinyl butyral are preferable. The transparent resin substrate may be of a single kind or may be a laminate including two or more layers.

In particular, a polycarbonate resin is preferable because it has excellent transparency, has high impact absorption to improve the safety at the time of collision, and further has excellent impact resistance so that it is not easily damaged in a light collision. For a polycarbonate resin, an acrylic resin, a cyclic polyolefin resin, a polyphenylene ether resin, and the like, thermoplastic resins other than the resin of the main component may be added within a range that does not impair the characteristics of the present invention, and the resultant material may be used as a resin composition. Note that in the case in which the optical laminate further includes a glass plate to be described later, and the glass plate supports or sandwiches the optical laminate layer, the transparent resin substrate should preferably be polyvinyl butyral. Note that the term "support" means the case in which (a-3) a glass plate is disposed on one side of the optical laminate, and "sandwich" means the case in which (a-3) glass plates are disposed on both sides.

(a-3) Glass Plate

The optical laminate layer may further include a glass plate or glass plates and may be used as functional glass supported by a glass plate or sandwiched by glass plates. For example, even in the case in which the functional glass is used as a windshield, as long as the glass plate has transparency that allows the front view to be sufficiently visually recognized, the glass plate is not limited to any specific ones. The refractive index of the glass plate should preferably be 1.2 or more and 2.0 or less, and more preferably be 1.4 or more and 1.8 or less. The thickness, shape, and the like of the glass plate are also not limited to any specific ones as long as they do not affect the reflection of display light, and the glass plate may be designed as appropriate according to the application. These glass plates may have, on its reflection surface, a high reflective film composed of a multilayer film, a metal thin film also having a heat shielding function, and the like. Although these films improve the reflectance of incident polarized light, in the case of using the functional glass as the windshields of automobiles, it is preferable to adjust the reflectance so that the transmittance of visible light of the functional glass is 70% or more. Note that examples of the glass plate include glass with a curved shape, for example, like a windshield. For the method of attaching glass plates to an optical laminate layer, for example, a method including using a thermoplastic resin for transparent resin substrates, sandwiching an optical layer with the two thermoplastic resins, further sandwiching them with two pieces of glass, and pressing and attaching them together in a high temperature and high pressure condition is preferable. In this case, for the thermoplastic resin, for example, a polyvinyl butyral resin (PVB), a polyvinyl alcohol resin (PVA), or an ethylene-vinyl acetate copolymer resin (EVA) is preferable, and PVB is more preferable. The thickness and hardness of the two transparent resin substrates are not limited to any specific ones as long as they do not affect the reflection of display light, and the two transparent resin substrates may be designed as appropriate so as to have functions such as cutting UV, heat shielding, sound insulation, light adjustment, and the like according to the application. The thickness and hardness of the two transparent resin substrates may be the same as or different from each other, but they should preferably be different.

The functional glass thus obtained can be used for the windshield, side glass, rear glass, and roof glass of not only standard-sized automobiles, compact automobiles, light automobiles, and the like but also large special purpose automobiles and small special purpose automobiles. The functional glass can also be used as windows of railroad vehicles, watercraft, and aircraft, and in addition, as window materials for building materials and industrial use. As for the form of usage, the functional glass which is laminated with or attached to a member having at least one of a UV cutting function, a heat shielding function, a sound insulating function, and a light adjusting function can be used.

(B) Display-Image Projection Means

In the image display system of the present invention, the display-image projection means used in the image display system including display-image projection means configured to emit S polarized light emits display light of S polarized light such that the incident angle relative to the surface of the optical laminate is an angle near the Brewster's angle. Here, an angle near the Brewster's angle means that defining the Brewster's angle of S polarized light relative to the surface of the optical laminate as $\alpha$, the incident angle of the S polarized light incident on the optical laminate is within a range of $\alpha$ - 10° or more and $\alpha$ + 10° or less. When the S polarized light from the display-image projection means is incident on the optical laminate at an angle near the Brewster's angle, most of the S polarized light reflects and reaches the observer, and thus the observer can visually recognize virtual images. Part of the S polarized light that could not reflect on the surface of the optical laminate and entered the optical laminate is converted by the optical layer into P polarized light, and the converted P polarized light passes through the optical laminate. Thus, it is possible to prevent the reflection from the outer side of the optical laminate, reducing the occurrence of double vision images. Note that if the light that reaches the display-image projection means is S polarized light, the light emitted from the display-image projection means may be P polarized light. In this case, since the emitted P polarized light needs to be converted into S polarized light, for example, it is preferable that a 1/2 wavelength plate be provided at a position where the P polarized light passes through before reaching the optical laminate.

(C) Polarized-Light Control Unit

The image display system of the present invention includes a polarized-light control unit having (c-1) a P-polarized-light control unit that transmits S polarized light and blocks P polarized light or (c-2) an S-polarized-light control unit that changes the polarization direction of incident light by 90° and blocks S polarized light. Examples of the P-polarized-light control unit that transmits S polarized light and blocks P polarized light include polarized sunglasses the lenses of which are produced such that the absorption axis of the polarization filter is perpendicular so that the lenses themselves transmit S polarized light and block P polarized light, or a polarization film the polarization filter of which has a perpendicular absorption axis so that the film transmits S polarized light and blocks P polarized light.

The S-polarized-light control unit should preferably have (c-2a) a retardation film that changes the polarization direction of incident light by 90°, in other words, converts P polarized light into S polarized light or converts S polarized light into P polarized light. Examples of such a retardation film include a 1/2 wavelength plate. The S-polarized-light control unit should preferably have not only the retardation film but also a polarization film that blocks S polarized light or polarized sunglasses that block S polarized light. Examples of the polarization film that blocks S polarized light include a polarization film the absorption axis of which is horizontal relative to the polarization axis of reflected light from the road surface, in other words, S polarized light incident on the polarization film. Examples of polarized sunglasses that block S polarized light include polarized sunglasses the polarization filters of which have absorption axes horizontal relative to the polarization axis of the S polarized light incident on the polarization filters. Of these, the S-polarized-light control unit should preferably have (c-2a) a retardation film that changes the polarization direction of incident light by 90° and (c-2b) a polarization film that blocks S polarized light. In particular, in the case of using both a retardation film and a polarization film, the S-polarized-light control unit may be a laminate including a retardation film and a polarization film that blocks S polarized light. Alternatively, these films may be disposed separately, but the retardation film and the polarization film should preferably be disposed in this order from the outside with respect to the observer. Fig. 2 is a schematic diagram illustrating an embodiment of a polarized-light control unit that an image display system of the present invention has. The polarized-light control unit 10 is an S-polarized-light control unit including a retardation film 10B and a polarization film 10A that blocks S polarized light. In Fig. 2, the retardation film 10B is disposed on the outside of the polarization film 10A with respect to the observer. Thus, the polarization direction of polarized light incident on the polarized-light control unit 10 is changed by 90° by the retardation film 10B. In the case in which the converted polarized light is S polarized light, the S polarized light is blocked by the polarization film 10A, but in the case in which the converted polarized light is P polarized light, the P polarized light passes through the polarization film 10A and reaches the observer. Note that in the polarized-light control unit 10 illustrated in Fig. 2, the retardation film 10B and the polarization film 10A are disposed with a distance in between, but the polarized-light control unit 10 may be a laminate including the retardation film 10B and the polarization film 10A. Although details will be described below, examples in which the retardation film 10B and the polarization film 10A are disposed with a distance in between include a case in which a retardation film 10B is disposed at a visor, and eyewear including a polarization film 10A is used; a method (a clip-on type) in which a retardation film 10B is attached to general polarized sunglasses with clips; and other cases. In addition, examples of the case in which the polarized-light control unit 10 is a laminate including a retardation film 10B and a polarization film 10A include a configuration in which a composite film including a retardation film 10B and a polarization film 10A attached to each other with glue or adhesive is used in eyewear.

In the case in which the S-polarized-light control unit is a combination of a 1/2 wavelength plate serving as a retardation film and a polarization film the absorption axis of which is horizontal relative to the polarization axis of the S polarized light incident on the polarization film, examples of a method of visually recognizing display images include a method in which a composite film including these films stacked or attached together is mounted on a visor in an automobile or eyewear, and the observer visually recognizes display images via the composite film. Examples of a method of visually recognizing display images also include a method in which a 1/2 wavelength plate serving as a retardation film is mounted on a visor in an automobile, a polarization film is mounted on an eyewear, and the observer visually recognizes display images with the eyewear via the 1/2 wavelength plate provided on the visor in the automobile. In the case of applying these methods to a HUD including an image display system, the size of the retardation film mounted on the visor in the automobile should preferably be adjusted to the display area of images of the head-up display. With this, it is possible to reduce adverse effects on the visual recognition of other in-vehicle displays such as car navigation systems in the center console section, meters, cluster, and electronic mirrors, which are designed in consideration of the visual recognition of display images on the assumption of general polarized sunglasses the polarization filters of which have horizontal absorption axes.

In the case in which the S-polarized-light control unit is a combination of a 1/2 wavelength plate serving as a retardation film and polarized sunglasses the polarization filters of which have absorption axes horizontal relative to the polarization axis of the S polarized light incident on the polarization filters, examples of methods of providing the 1/2 wavelength plate to the polarized sunglasses include a method in which the observer wears sunglasses having the 1/2 wavelength plate as over-glasses over general polarized sunglasses, a method (clip-on type) in which sunglasses having the 1/2 wavelength plate are attached over general polarized sunglasses with clips, and other methods. Wearing the over-glasses and the clip-on type make it easy to switch blocking polarized light between when visually recognizing display images and in other ordinary time, and because these methods provide the normal anti-glare effect in ordinary time, these methods are preferable. In particular, in the case of the clip-on type, if the clips are retractable, it makes it easier to switch blocking polarized light. In addition, a method in which a film including a 1/2 wavelength plate is attached to the surface of general polarized sunglasses with glue or adhesive can also be used. Although types of glue and adhesive are not limited to any specific ones, in the case in which the 1/2 wavelength plate needs to be detachable, a glue excellent in reworkability is preferable. For example, silicone based glue, acrylic based glue, and the like which are also excellent in transparency are preferable. Other examples include a method involving molding lenses in which a 1/2 wavelength plate is inserted in advance on the light incident side of the polarization filters as the lens configuration of polarized sunglasses.

In the method in which a 1/2 wavelength plate is provided on the light incident side of general polarized sunglasses the polarization filters of which have absorption axes horizontal relative to the polarization axis of the S polarized light incident on the polarization filters, in order to efficiently convert S polarized light into P polarized light or convert P polarized light into S polarized light, the angle $\theta$ between the polarization axis of linearly polarized light and the slow axis of the 1/2 wavelength plate should preferably be controlled to be 35° or more and 47° or less. In the case in which the angle $\theta$ is less than 35° or more than 47°, the polarization axis conversion performance when converting the S polarized light incident on the 1/2 wavelength plate into the P polarized light is low, and this makes display images on the display dark. This may impair the anti-glare effect when eyewear is used. Thus, controlling this angle $\theta$ appropriately allows the 1/2 wavelength plate to exhibit favorable polarization axis conversion performance, thereby enabling clear visual recognition of display images. Although the wavelength dispersibility of the 1/2 wavelength plate is not limited to any specific characteristics as long as it is suitable for the application for eyewear, it is desirable to have reverse wavelength dispersibility for correct polarization conversion in a wide wavelength range in the range of visible light.

<First Embodiment>

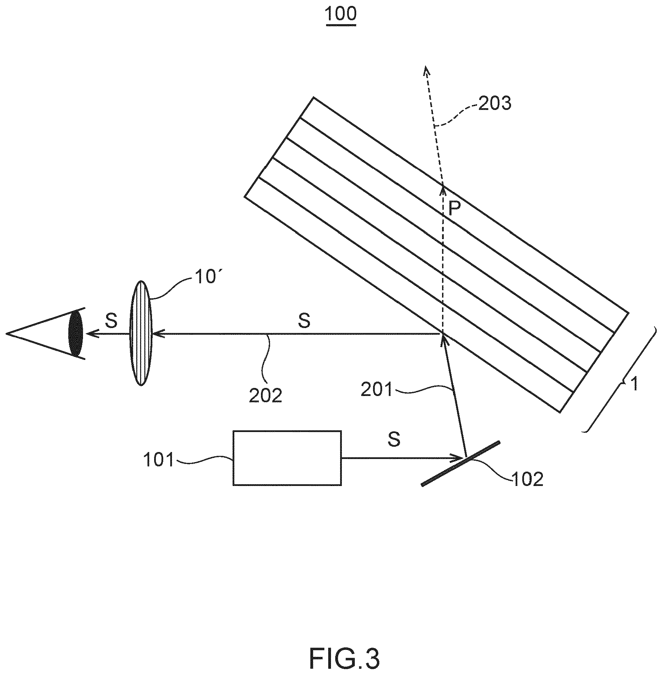

Fig. 3 is a schematic overview diagram illustrating an embodiment of a head-up display system including an image display system of the present invention. As illustrated in Fig. 3, the HUD system (image display system) 100 of the present embodiment includes display-image projection means 101 for emitting S polarized light as display light for showing display images, an optical laminate 1 on which the S polarized light emitted from the display-image projection means 101 is incident, and a polarized-light control unit 10' serving as a P-polarized-light control unit. The S polarized light emitted from the display-image projection means 101 is reflected on a reflection mirror 102, and this reflected display light reaches the optical laminate 1. The optical laminate 1, as illustrated in Fig. 1, includes, an optical layer 2, transparent resin substrates 3 on both sides of the optical layer 2, and glass plates 4 further on both outer sides of the transparent resin substrates 3.

In the HUD system with the configuration described above, incident light 201 of the S polarized light emitted from the display-image projection means 101 is incident on the optical laminate 1 at an incident angle near the Brewster's angle. The incident light 201 reflects on the interface between the surface of the optical laminate 1 on the observer side and air, generating reflected light 202. Since the reflected light 202 is S polarized light, even though the polarized-light control unit 10' having the P-polarized-light control unit configured to block P polarized light is used, the S polarized light passes through without being blocked. Thus, the reflected light 202 having passed through is visually recognized as display images by the observer.

Part of the incident light 201 that is not reflected as the reflected light 202 and is incident on the optical laminate 1 propagates in the optical laminate 1 and is converted by the optical layer 2 into P polarized light. The incident light 201 converted into P polarized light propagates at the interface between a glass plate 4 disposed on the outer side of the optical laminate 1 and air at an angle near the Brewster's angle. Thus, the reflected light on this interface is substantially 0, the incident light 201 converted into P polarized light passes through the optical laminate 1 as transmitted light 203.

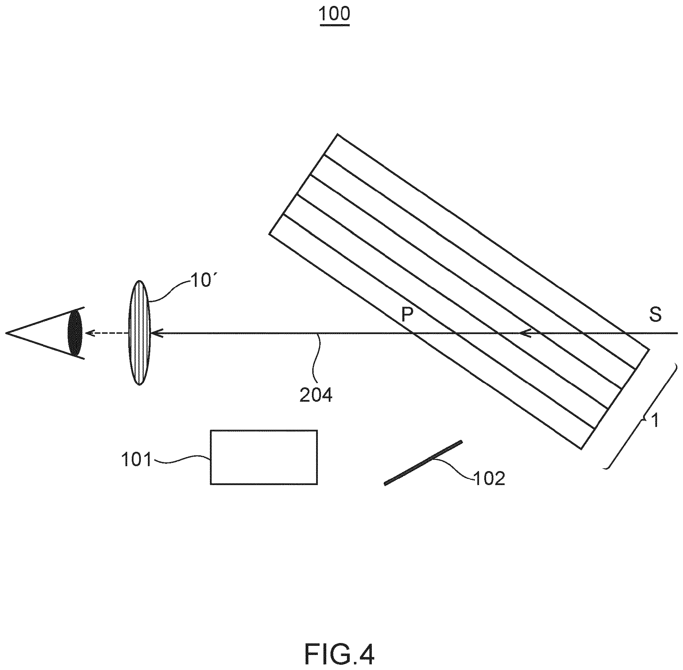

Meanwhile, Fig. 4 illustrates an optical path for the case in which reflected light from the road surface is incident on the optical laminate in the HUD system (image display system) 100 of Fig. 3. Since the reflected light from the road surface includes many S polarized light components, the S polarized light is incident from the outer side of the optical laminate 1. The incident S polarized light propagates in the optical laminate 1 and is converted by the optical layer 2 into P polarized light. The incident light 204 converted into P polarized light further propagates in the optical laminate 1 and passes through the optical laminate 1, but the incident light 204 does not pass through the polarized-light control unit 10' having the P-polarized-light control unit configured to block P polarized light and is blocked by the polarized-light control unit 10'. Thus, the transmitted light is substantially 0, preventing the reflected light from the outside (outside of the vehicle) from reaching the observer.

<Second Embodiment>

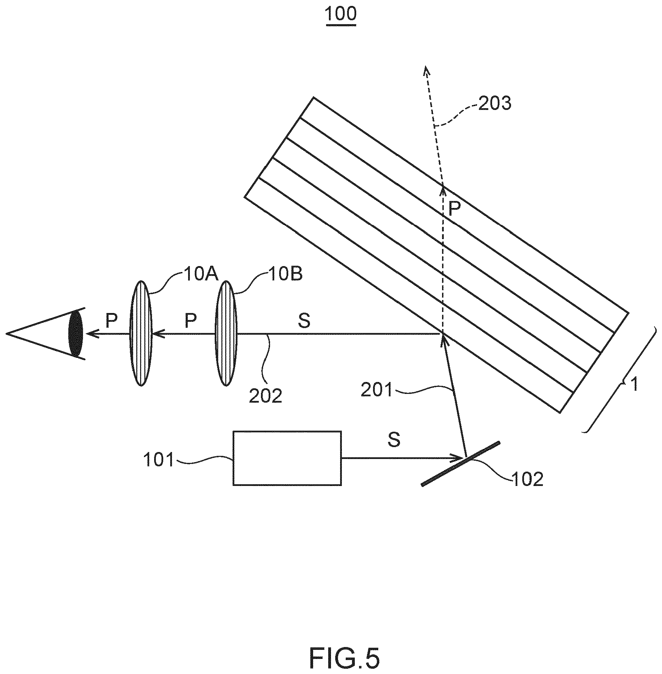

Fig. 5 is a schematic overview diagram illustrating another embodiment of a head-up display system including an image display system of the present invention. As illustrated in Fig. 5, a HUD system (image display system) 100 of the present embodiment includes display-image projection means 101 for emitting S polarized light as display light for showing display images, an optical laminate 1 on which the S polarized light emitted from the display-image projection means 101 is incident, and a retardation film 10B that changes the polarization direction of incident light by 90° and a polarization film 10A that blocks S polarized light, these films serving as an S-polarized-light control unit. In Fig. 5, the retardation film 10B and the polarization film 10A are disposed separately, and the retardation film 10B is disposed on the outside of the polarization film 10A with respect to the observer, in other words, on the side on which the polarized light from the optical laminate 1 is incident. As in Fig. 3, the S polarized light emitted from the display-image projection means 101 is reflected on the reflection mirror 102, and this reflected display light reaches the optical laminate 1. The optical laminate 1, as illustrated in Fig. 1, includes, an optical layer 2, transparent resin substrates 3 on both sides of the optical layer 2, and glass plates 4 further on both outer sides of the transparent resin substrates 3.

In the HUD system with this configuration described above, as in Fig. 3, incident light 201 of the S polarized light emitted from the display-image projection means 101 is incident on the optical laminate 1 at an incident angle near the Brewster's angle. The incident light 201 reflects on the interface between the surface of the optical laminate 1 on the observer side and air, generating reflected light 202. Since the reflected light 202 is S polarized light, the reflected light 202 is converted by the retardation film 10B into P polarized light. The reflected light 202 converted into P polarized light, even though the polarization film 10A that blocks S polarized light is used, passes through the polarization film 10A without being blocked. Thus, the reflected light 202 having passed through is visually recognized as display images by the observer.

Part of the incident light 201 that is not reflected as the reflected light 202 and is incident on the optical laminate 1, as in Fig. 3, propagates in the optical laminate 1 and is converted by the optical layer 2 into P polarized light. The incident light 201 converted into P polarized light propagates at the interface between the glass plate 4 disposed on the outer side of the optical laminate 1 and air at an angle near the Brewster's angle. Thus, the reflected light on this interface is substantially 0, the incident light 201 converted into P polarized light passes through the optical laminate 1 as transmitted light 203.

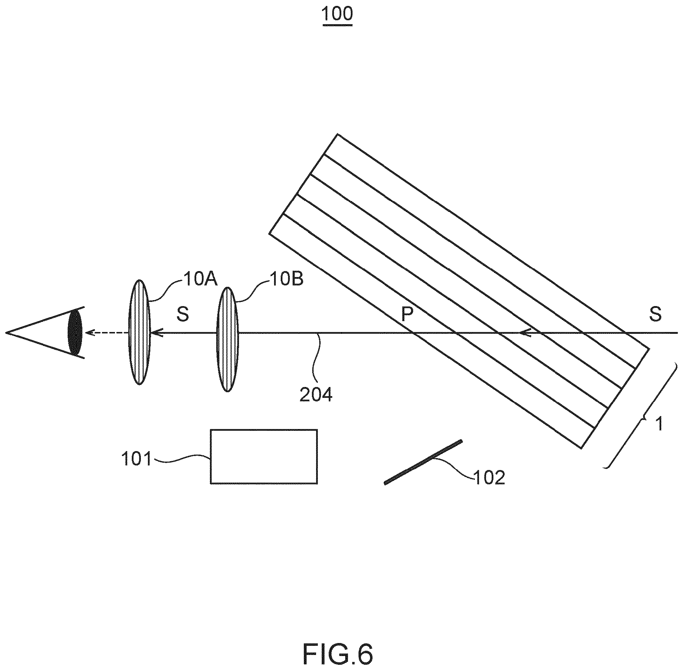

Meanwhile, Fig. 6 illustrates an optical path for the case in which reflected light from the road surface is incident on the optical laminate in the HUD system (image display system) 100 of Fig. 5. Since the reflected light from the road surface includes many S polarized light components as in Fig. 4, S polarized light is incident from the outer side of the optical laminate 1. The incident S polarized light propagates in the optical laminate 1 and is converted by the optical layer 2 into P polarized light. The incident light 204 converted into P polarized light further propagates in the optical laminate 1 and passes through the optical laminate 1, and transmitted light 204, which is P polarized light, is converted by the retardation film 10B into S polarized light. The transmitted light 204 converted into S polarized light is blocked by the polarization film 10A configured to block S polarized light. Thus, the transmitted light is substantially 0, preventing the reflected light from the outside (outside of the vehicle) from reaching the observer.

<Third Embodiment>

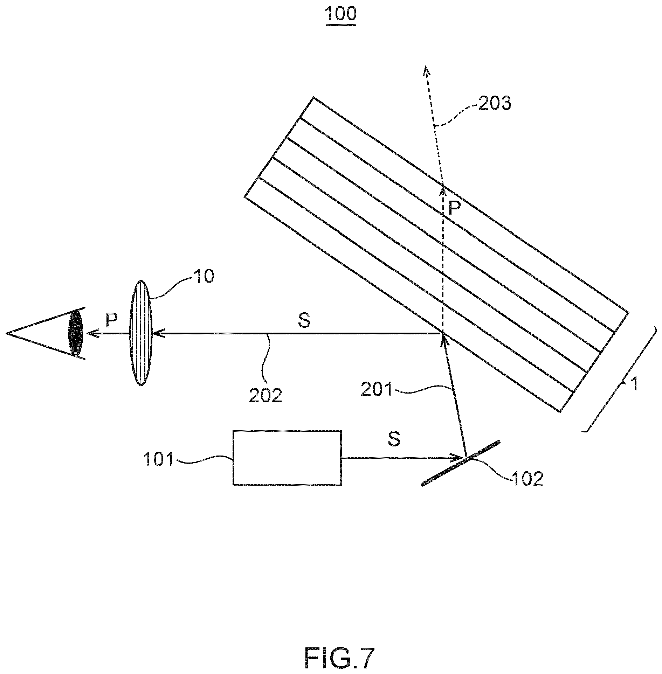

Fig. 7 is a schematic overview diagram illustrating an embodiment of a head-up display system including an image display system of the present invention. As illustrated in Fig. 7, the HUD system (image display system) 100 of the present embodiment includes display-image projection means 101 for emitting S polarized light as display light for showing display images, an optical laminate 1 on which the S polarized light emitted from the display-image projection means 101 is incident, and a polarized-light control unit 10 including a retardation film 10B and a polarization film 10A directly laminated to each other and serving as an S-polarized-light control unit. In the polarized-light control unit 10, the retardation film 10B is disposed on the outside of the polarization film 10A with respect to the observer, in other words, on the side on which the polarized light from the optical laminate 1 is incident. The S polarized light emitted from the display-image projection means 101 is reflected on the reflection mirror 102, and this reflected display light reaches the optical laminate 1. The optical laminate 1, as illustrated in Fig. 1, includes, an optical layer 2, transparent resin substrates 3 on both sides of the optical layer 2, and glass plates 4 further on both outer sides of the transparent resin substrates 3.

In the HUD system with the configuration described above, as in Fig. 3, incident light 201 of the S polarized light emitted from the display-image projection means 101 is incident on the optical laminate 1 at an incident angle near the Brewster's angle. The incident light 201 reflects on the interface between the surface of the optical laminate 1 on the observer side and air, generating reflected light 202. Since the reflected light 202 is S polarized light, the reflected light 202 is converted into P polarized light by the retardation film 10B in the polarized-light control unit 10 which is a laminate including the retardation film 10B and the polarization film 10A. The reflected light 202 converted into P polarized light passes through as P polarized light via the polarization film 10A configured to block S polarized light. Thus, the reflected light 202 having passed through is visually recognized as display images by the observer.

Part of the incident light 201 that is not reflected as the reflected light 202 and is incident on the optical laminate 1, as in Fig. 3, propagates in the optical laminate 1 and is converted by the optical layer 2 into P polarized light. The incident light 201 converted into P polarized light propagates at the interface between the glass plate 4 disposed on the outer side of the optical laminate 1 and air at an angle near the Brewster's angle. Thus, the reflected light on this interface is substantially 0, the incident light 201 converted into P polarized light passes through the optical laminate 1 as transmitted light 203.

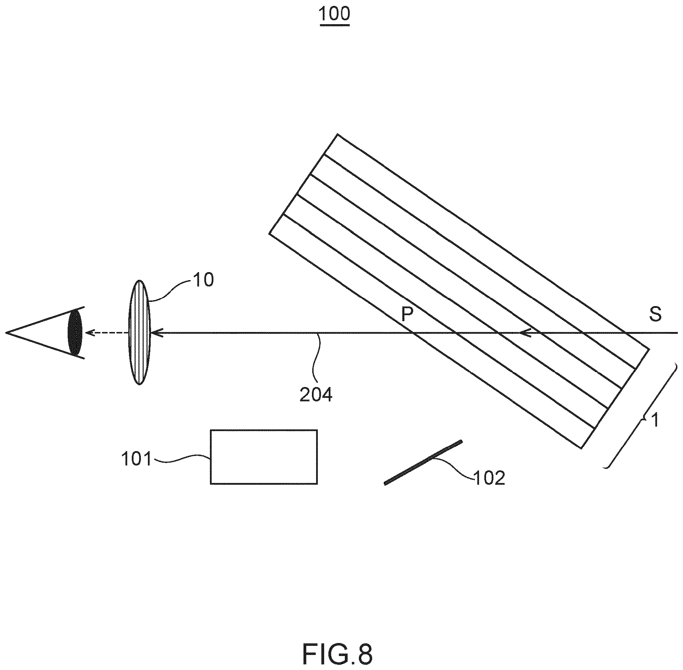

Meanwhile, Fig. 8 illustrates an optical path for the case in which reflected light from the road surface is incident on the optical laminate in the HUD system (image display system) 100 of Fig. 7. Since the reflected light from the road surface includes many S polarized light components, as in Fig. 4, S polarized light is incident from the outer side of the optical laminate 1. The incident S polarized light propagates in the optical laminate 1 and is converted by the optical layer 2 into P polarized light. The incident light 204 converted into P polarized light further propagates in the optical laminate 1 and passes through the optical laminate 1, and transmitted light 204, which is P polarized light, is converted by the retardation film 10B into S polarized light in the polarized-light control unit 10 which is a laminate including the retardation film 10B and the polarization film 10A. The transmitted light 204 converted into S polarized light is blocked by the polarization film 10A configured to block S polarized light. Thus, the transmitted light is substantially 0, preventing the reflected light from the outside (outside of the vehicle) from reaching the observer.

Industrial Applicability

With the image display system of the present invention, it is possible to visually recognize display images without the sense of incongruity even in a head-up display of a type using S polarized light, and it is also possible to ensure a sufficient anti-glare effect against light from the outside. Thus, it is possible to achieve clear visual recognition of display images while ensuring an anti-glare effect against incident light from the outside. Such image display systems are useful for the application to head-up display systems. In addition, since the layer configuration of the optical laminate is not complicated, it is also possible to contribute to simplifying the manufacturing process.

List of Reference Signs

1 optical laminate
2 optical layer
3 transparent resin substrate
4 glass plate
10, 10' polarized-light control unit
10A polarization film
10B retardation film
100 head-up display system, image display system
101 display-image projection means
102 reflection mirror
201 incident light
202 reflected light
203, 204 transmitted light

**Claims**

1. An image display system (100) comprising:

   an optical laminate (1) including an optical layer (2) that changes a polarization direction of incident light by 90°; a transparent resin substrate (3), and a glass plate (4);
   display-image projection means (101) for emitting S-polarized light to the optical laminate (1); and
   a polarized-light control unit (10, 10') including a P-polarized-light control unit that transmits S-polarized light and blocks P-polarized light or an S-polarized-light control unit that changes the polarization direction of incident light by 90°and blocks S-polarized light;
   wherein the optical layer (2) is a 1/2 wavelength plate
   **characterized in that**
   S-polarized light reflected on the optical laminate (1) is incident on the polarized-light control unit (10, 10'); and **in that**
   transparent resin substrates (3) are disposed on both sides of the optical layer (2) and the glass plates (4) are further provided on both sides of the transparent resin substrates (3).

2. The image display system (100) according to claim 1, wherein
   the polarized-light control unit (10, 10') includes an S-polarized-light control unit.

3. The image display system (100) according to claim 2, wherein
   the S-polarized-light control unit (10, 10') includes a retardation film (10B) that changes the polarization direction of incident light by 90°.

4. The image display system (100) according to claim 2, wherein
   the S-polarized-light control unit (10, 10') includes a retardation film (10B) that changes the polarization direction of incident light by 90° and (c-2b) a polarization film (10A) that blocks S polarized light.

5. The image display system (100) according to claim 4, wherein
   the retardation film (10B) is a 1/2 wavelength plate.

6. The image display system (100) according to claim 4 or 5, wherein
   the S-polarized-light control unit (10, 10') is a laminate including the retardation film (10B) and the polarization film (10A).

7. The image display system (100) according to any one of claims 4 to 6, wherein
   the retardation film (10B) and the polarization film (10A) are disposed in this order from the outside with respect to an observer.

**8.** The image display system (100) according to any one of claims 1 to 7, wherein
the polarized-light control unit (10, 10') is included in eyewear.

**9.** The image display system (100) according to any one of claims 1 to 7, wherein
the polarized-light control unit (10, 10') is included in a visor in an automobile.

**10.** The image display system (100) according to claim 4 or 5, wherein
the retardation film (10B) is included in a visor in an automobile, and the polarization film (10A) is included in eyewear.

**11.** The image display system (100) according to any one of claims 1 to 10, wherein
the optical layer (2) is disposed to have a positional relationship in which the angle between the polarization axis of S polarized light incident in a state inclined at a Brewster's angle and a slow axis of the optical layer is within a range of $45° \pm 3°$.

**12.** A head-up display system comprising
the image display system (100) according to any one of claims 1 to 11.

**Patentansprüche**

**1.** Bildanzeigesystem (100), umfassend:

ein optisches Laminat (1) mit einer optischen Schicht (2), die eine Polarisationsrichtung von einfallendem Licht um 90° ändert; ein transparentes Harzsubstrat (3) und eine Glasplatte (4);
eine Anzeigebildprojektionseinrichtung (101) zum Emittieren von S-polarisiertem Licht auf das optische Laminat (1); und
eine Polarisationslicht-Steuereinheit (10, 10'), aufweisend eine Steuereinheit für P-polarisiertes Licht, die S-polarisiertes Licht durchlässt und P-polarisiertes Licht blockiert, oder eine Steuereinheit für S-polarisiertes Licht, die die Polarisationsrichtung des einfallenden Lichts um 90° ändert und S-polarisiertes Licht blockiert;

wobei die optische Schicht (2) eine ½-Wellenlängenplatte ist,
**dadurch gekennzeichnet, dass**

S-polarisiertes Licht, das an dem optischen Laminat (1) reflektiert wird, auf die Polarisationslicht-Steuereinheit (10, 10') auftrifft; und dass
transparente Harzsubstrate (3) auf beiden Seiten der optischen Schicht (2) angeordnet sind und die Glasplatten (4) ferner auf beiden Seiten der transparenten Harzsubstrate (3) bereitgestellt sind.

**2.** Bildanzeigesystem (100) nach Anspruch 1, wobei
die Polarisationslicht-Steuereinheit (10, 10') eine Steuereinheit für S-polarisiertes Licht enthält.

**3.** Bildanzeigesystem (100) nach Anspruch 2, wobei
die S-Polarisationslicht-Steuereinheit (10, 10') eine Verzögerungsfolie (10B) enthält, die die Polarisationsrichtung des einfallenden Lichts um 90° ändert.

**4.** Bildanzeigesystem (100) nach Anspruch 2, wobei
die Polarisationslicht-Steuereinheit (10, 10') einen Verzögerungsfilm (10B) enthält, der die Polarisationsrichtung des einfallenden Lichts um 90° ändert, und einen Polarisationsfilm (10A), der S-polarisiertes Licht blockiert.

**5.** Bildanzeigesystem (100) nach Anspruch 4, wobei
die Verzögerungsfolie (10B) eine ½-Wellenlängenplatte ist.

**6.** Bildanzeigesystem (100) nach Anspruch 4 oder 5, wobei
die S-Polarisationslicht-Steuereinheit (10, 10') ein Laminat ist, das die Verzögerungsfolie (10B) und die Polarisationsfolie (10A) enthält.

**7.** Bildanzeigesystem (100) nach einem der Ansprüche 4 bis 6, wobei
die Verzögerungsfolie (10B) und die Polarisationsfolie (10A) in dieser Reihenfolge in Bezug von außerhalb eines Betrachters angeordnet sind.

**8.** Bildanzeigesystem (100) nach einem der Ansprüche 1 bis 7, wobei
die Polarisationslicht-Steuereinheit (10, 10') in eine Brille eingebracht ist.

**9.** Bildanzeigesystem (100) nach einem der Ansprüche 1 bis 7, wobei
die Polarisationslicht-Steuereinheit (10, 10') in ein Visier eines Kraftfahrzeugs eingebracht ist.

**10.** Bildanzeigesystem (100) nach Anspruch 4 oder 5, wobei
die Verzögerungsfolie (10B) in ein Visier eines Kraftfahrzeugs eingebracht ist, und die Polarisationsfolie (10A) in eine Brille eingebracht ist.

**11.** Bildanzeigesystem (100) nach einem der Ansprüche 1 bis 10, wobei
die optische Schicht (2) so angeordnet ist, dass sie eine Positionsbeziehung aufweist, in der der Winkel zwischen der Polarisationsachse von S-polarisiertem Licht, das in einem unter einem Brewster-Winkel geneigten Zustand einfällt, und einer langsamen Achse der optischen Schicht innerhalb eines Bereichs von 45° $\pm$ 3° liegt.

**12.** Head-up-Anzeigesystem umfassend:
das Bildanzeigesystem (100) nach einem der Ansprüche 1 bis 11.


**Revendications**

**1.** Système d'affichage d'image (100), comprenant :

un stratifié optique (1) incluant une couche optique (2) qui modifie une direction de polarisation de la lumière incidente de 90° ; un substrat de résine transparent (3) et une plaque de verre (4);
des moyens de projection d'image d'affichage (101) pour émettre une lumière polarisée S vers le stratifié optique (1) ; et
une unité de commande de lumière polarisée (10, 10') incluant une unité de commande de lumière polarisée P qui transmet la lumière polarisée S et bloque la lumière polarisée P ou une unité de commande de lumière polarisée S qui modifie la direction de polarisation de la lumière incidente de 90° et bloque la lumière polarisée S ;
dans lequel la couche optique (2) est une plaque de 1/2 longueur d'onde,
**caractérisé en ce que**
la lumière polarisée S réfléchie sur le stratifié optique (1) est incidente sur l'unité de commande de lumière polarisée (10, 10') ; et **en ce que**
des substrats de résine transparents (3) sont disposés des deux côtés de la couche optique (2) et les plaques de verre (4) sont en outre prévues des deux côtés des substrats de résine transparents (3).

**2.** Appareil d'affichage d'image (100) selon la revendication 1, dans lequel l'unité de commande de lumière polarisée (10, 10') inclut une unité de commande de lumière polarisée S.

**3.** Appareil d'affichage d'image (100) selon la revendication 2, dans lequel l'unité de commande de lumière polarisée S (10, 10') inclut un film de retard (10B) qui modifie la direction de polarisation de la lumière incidente de 90°.

**4.** Appareil d'affichage d'image (100) selon la revendication 2, dans lequel l'unité de commande de lumière polarisée S (10, 10') inclut un film de retard (10B) qui modifie la direction de polarisation de la lumière incidente de 90° et un film de polarisation (10A) qui bloque la lumière polarisée S.

**5.** Système d'affichage d'image (100) selon la revendication 4, dans lequel le film de retard (10B) est une plaque de 1/2 longueur d'onde.

**6.** Système d'affichage d'image (100) selon la revendication 4 ou 5, dans lequel
l'unité de commande de lumière polarisée S (10, 10') est un stratifié incluant le film de retard (10B) et le film de polarisation (10A).

**7.** Système d'affichage d'image (100) selon l'une quelconque des revendications 4 à 6, dans lequel
le film de retard (10B) et le film de polarisation (10A) sont disposés dans cet ordre depuis l'extérieur par rapport à un observateur.

**8.** Système d'affichage d'image (100) selon l'une quelconque des revendications 1 à 7, dans lequel
l'unité de commande de lumière polarisée (10,10') est incluse dans des lunettes.

**9.** Système d'affichage d'image (100) selon l'une quelconque des revendications 1 à 7, dans lequel
l'unité de commande de lumière polarisée (10, 10') est incluse dans un pare-soleil d'une automobile.

**10.** Système d'affichage d'image (100) selon la revendication 4 ou 5, dans lequel
le film de retard (10B) est inclus dans un pare-soleil d'une automobile, et le film de polarisation (10A) est inclus dans des lunettes.

**11.** Système d'affichage d'image (100) selon l'une quelconque des revendications 1 à 10, dans lequel
la couche optique (2) est disposée de manière à présenter une relation de position dans laquelle l'angle entre l'axe de polarisation de la lumière polarisée S incidente dans un état incliné à un angle de Brewster et un axe lent de la couche optique est dans une plage de 45° $\pm$ 3°.

**12.** Système d'affichage tête haute, comprenant
le système d'affichage d'image (100) selon l'une quelconque des revendications 1 à 11.

FIG.1

FIG.2

100

203

P

10´

S · S

202 · 201

101 · S

102

1

FIG.3

FIG.4

100

203

P

10A  10B

P  P  S

202  201

101  S

102

1

FIG.5

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6040271 A
- JP H0640271 B
- WO 2016056617 A1
- JP 2015225236 A
- JP 2019113631 A
- US 20170045659 A1
- US 20190129167 A1